# EUROPEAN PATENT SPECIFICATION

(11) **EP 2 921 346 B1**
(45) Date of publication and mention of the grant of the patent: **27.06.2018**
(21) Application number: 14160904.0
(22) Date of filing: 20.03.2014
(51) Int. Cl.: B60N 3/02

(54) **Vehicle grab handle and motor vehicle**
Fahrzeughandgriff und Fahrzeug
Poignée de véhicule et véhicule à moteur

(43) Date of publication of application: 23.09.2015
(73) Proprietor: Ford Global Technologies, LLC, Dearborn, MI 48126 (US)
(72) Inventor: Sögütçü, Ceyhun, 41900 Derince/Kocaeli (TR); Ülker, Aytug, 41275 Yeniköy Kocaeli (TR); Iseri, Tuncer, 41950 Gölcük/Kocaeli (TR); Sumer, Nurhat, 41200 Izmit/Kocaeli (TR)
(74) Representative: Illing, Rolf

(56) References cited:
- DE-A1- 10 022 111
- DE-A1- 19 926 868
- US-A1- 2009 091 103

## Description

The present invention relates to a grab handle for a passenger compartment of a vehicle and to a motor vehicle (see, for example, DE 199 26 868 A1, corresponding to the preamble of claim 1). Many vehicles include one or more grab handles provided inside a passenger compartment wherein they are attached to a roof side rail of the vehicle. The grab handle provides those entering and exiting the vehicle a convenient structure to hold onto.

It is an object of the present invention to provide an improved grab handle for a passenger compartment of a vehicle which can be manufactured and installed in vehicles with little expenditure of time and little costs. Another object of the present invention is to provide an improved motor vehicle which allows passengers to easily enter and exit a passenger compartment of the vehicle.

These objects are achieved by a grab handle having the features of claim 1 and by a motor vehicle having the features of claim 4. Further, particularly advantageous embodiments of the invention are disclosed in the respective dependent claims.

It should be noted that the individual features listed in the description below can be combined in any technically meaningful way with each other and show further embodiments of the invention when falling within its scope as defined by the claims. The description of the invention is additionally characterized and specified particularly in connection with the figures.

According to the present invention as defined by the technical features set forth in independent claim 1 or 4, a grab handle for a passenger compartment of a vehicle comprises a single mounting bracket including an attachment portion and a retaining portion. The attachment portion defines a plurality of apertures for attaching to a vehicle body member and the retaining portion defines two apertures for attaching a grip body to the mounting bracket. Furthermore, the attachment portion includes an abutment flange for abutment on said vehicle body member. This allows easy mounting of the mounting bracket to the vehicle body member as the abutment flange assures a proper alignment of the attachment portion relative to the vehicle body member. Thus, the grab handle can be mounted to the vehicle body member in a shorter time.

According the present invention the abutment flange extends substantially orthogonal to the attachment portion, thus advantageously forming substantially an L-shaped cross section of the attachment portion and the abutment flange. Hence, the attachment portion can be easily aligned with the vehicle body member.

Another feature of the present invention provides that the retaining portion extends substantially orthogonal to the attachment portion, thus advantageously forming substantially an L-shaped cross section of the attachment portion and the retaining portion which results in a sturdy mounting bracket strong enough to handle forceful tugs and/or pulls by a passenger grabbing the grip body and pulling on it even in different directions.

For an easy mounting of the grip body to the mounting bracket, according to an advantageous embodiment of the present invention, the grip body is attachable to the retaining portion of the mounting bracket via bolts.

Still another advantageous embodiment of the present invention provides that at least the attachment portion and the retaining portion of the mounting bracket are formed of a single piece of sheet metal which allows fast and cost-effective manufacturing of the grab handle.

According to another aspect of the present invention as defined in claim 4, there is provided a motor vehicle comprising a grab handle according to any of the above-described embodiments.

A particularly preferred embodiment of the present invention provides that the vehicle body member is an A-pillar structure of the vehicle.

According to yet another advantageous embodiment of the present invention the mounting bracket is covered by a trim of the vehicle body member.

Still another advantageous embodiment of the present invention provides that the attachment portion of the mounting bracket is fastened to the vehicle body member via rivets.

Further features and advantages of the present invention will become apparent from the following description of a non-limiting embodiment of the invention which will be explained below with reference to the drawing. In this drawing:
- FIG. 1: is an exploded view of an A-pillar structure of a vehicle to which an exemplary embodiment of a grab handle according to the present invention is going to be attached;
- FIG. 2: is a view of the A-pillar structure of FIG. 1 after a first mounting step has taken place;
- FIG. 3: is the view of the A-pillar structure of FIG. 1 after a second mounting step has taken place;
- FIG. 4: is the view of the A-pillar structure of FIG. 1 after a third mounting step has taken place; and
- FIG. 5: is a cross sectional view along the line A-A in FIG. 4 of the A-pillar structure of FIG. 1 having the grab handle mounted thereon.

In the different figures same parts are always provided with the same reference numerals so that they are generally described only once.

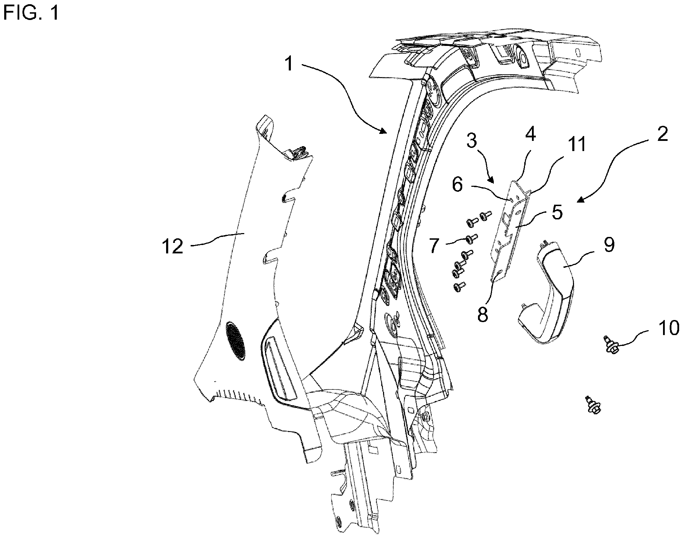

FIG. 1 is an exploded view of an A-pillar structure 1 of a vehicle to which a grab handle 2 according to an exemplary embodiment of the present invention is going to be attached. As can be observed in FIG. 1, the grab handle 2 comprises a single mounting bracket 3 including an attachment portion 4 and a retaining portion 5. The attachment portion 4 defines a plurality of apertures 6 for attaching to the A-pillar structure 1 of the vehicle. Preferably, the attachment portion 4 is attached to the A-pillar structure 1 via rivets 7. Further, the retaining portion 5 defines two apertures 8 for attaching a grip body 9 to said mounting bracket 3. Preferably, the grip body 9 is secured to the retaining portion 5 of the mounting bracket 3 via bolts 10. Moreover, the attachment portion 4 of the mounting bracket 3 includes an abutment flange 11 for abutment on the A-pillar structure 1. As can be seen in FIG. 1, the abutment flange 11 extends substantially orthogonal to the attachment portion 4. Likewise, the retaining portion 5 extends substantially orthogonal to the attachment portion 4. However, the retaining portion 5 extends in a direction opposite to that of the abutment flange 11.

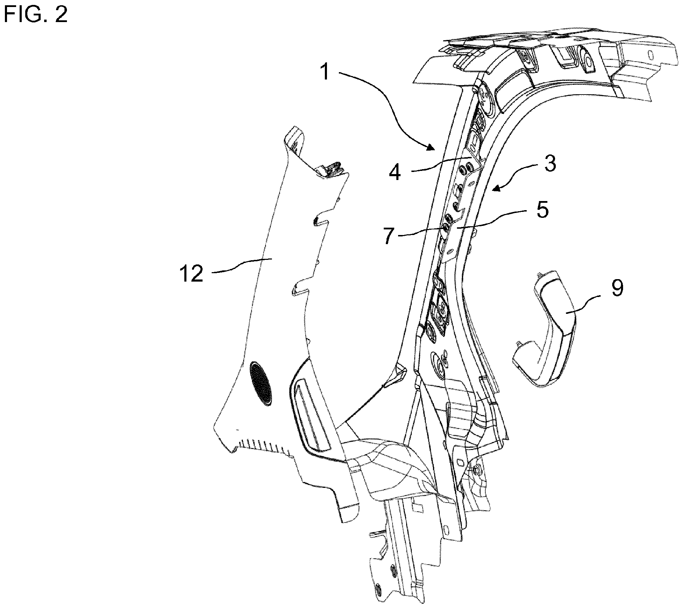

FIG. 2 shows the view of the A-pillar structure 1 of FIG. 1 after a first mounting step has taken place. In particular, in FIG. 2, the mounting bracket 3 is attached to the A-pillar structure 1 via the rivets 7.

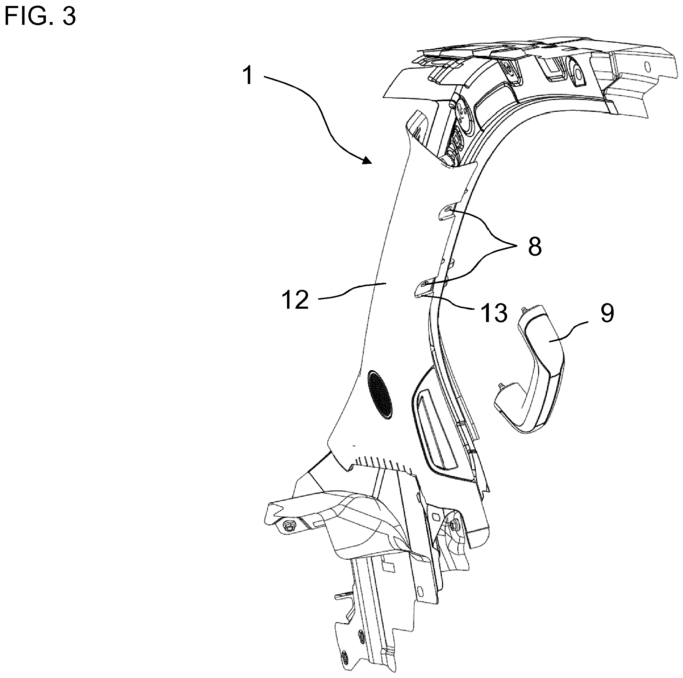

FIG. 3 shows the view of the A-pillar structure 1 of FIG. 1 after a second mounting step has taken place. In particular, in FIG. 3, a trim 12 is attached to the A-pillar structure 1 covering the mounting bracket 3. The trim 12 comprises two recesses 13 to respectively expose the apertures 8 of the retaining portion 5 of the mounting bracket 3.

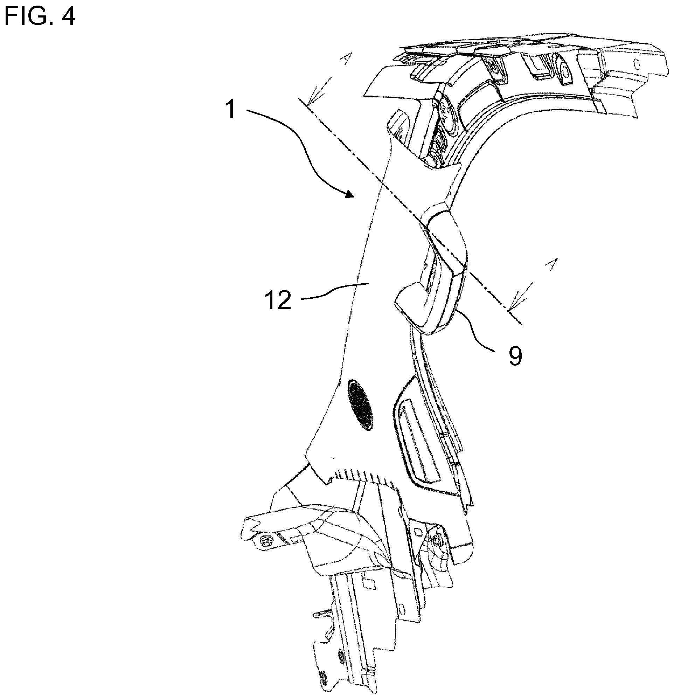

FIG. 4 shows the view of the A-pillar structure 1 of FIG. 1 after a third mounting step has taken place. In particular, in FIG. 4, the grip body 9 is attached to the retaining portion 5 of the mounting bracket 3 via the bolts 10.

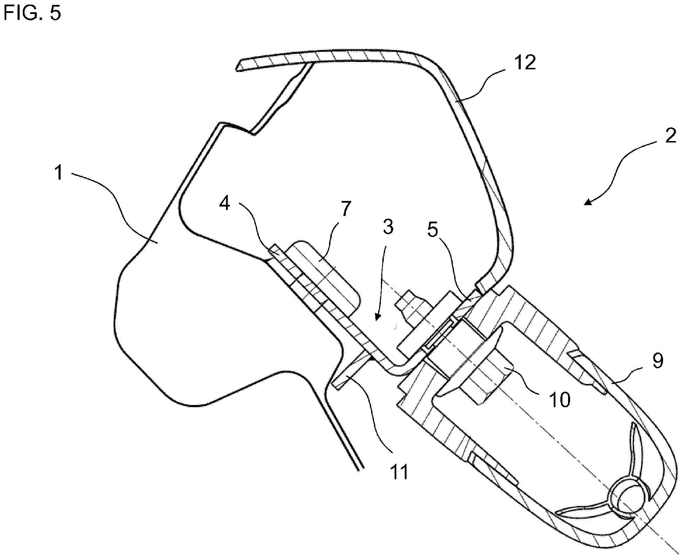

FIG. 5 shows a cross sectional view along the line A-A in FIG. 4 of the A-pillar structure 1 of FIG. 1 having the grab handle 2 mounted thereon. As is depicted in FIG. 5, the abutment flange 11 abuts on the A-pillar structure 1. In the exemplary embodiment of the grab handle 2 shown in FIG. 5, the abutment flange 11 is welded to the attachment portion 4 of the mounting bracket 3. The attachment portion 4 and the retaining portion 5 of the mounting bracket 3 are formed of a single piece of sheet metal.

The above-described grab handle and the motor vehicle according to the present invention are not limited to the specific embodiments disclosed herein, but may also encompass other embodiments falling within the scope of the present invention as defined by the claims and having the same effect. It will be apparent to a skilled person in the art that various variations and modifications of the herein disclosed embodiments are possible within the scope of the present invention.

In a preferred embodiment the grab handle according to the present invention is used on an A-pillar structure of a motor vehicle.

### List of reference numerals:

- 1: A-pillar
- 2: Grab handle
- 3: Mounting bracket
- 4: Attachment portion
- 5: Retaining portion
- 6: Aperture
- 7: Rivet
- 8: Aperture
- 9: Grip body
- 10: Bolt
- 11: Abutment flange
- 12: Trim
- 13: Recess

## Claims

1. A grab handle for a passenger compartment of a vehicle, comprising a single mounting bracket (3) including an attachment portion (4) and a retaining portion (5), said attachment portion (4) defining a plurality of apertures (6) for attaching to a vehicle body member (1) and said retaining portion (5) defining two apertures (8) for attaching a grip body (9) to said mounting bracket (3), wherein said attachment portion (4) includes an abutment flange (11) for abutment on said vehicle body member (1), wherein said abutment flange (11) extends substantially orthogonal to said attachment portion (4),
**characterized in that**
said retaining portion (5) extends substantially orthogonal to said attachment portion (4) and said retaining portion (5) extends in a direction opposite to that of said abutment flange (11).

2. The grab handle according to claim 1, wherein said grip body (9) is attachable to said retaining portion (5) of said mounting bracket (3) via bolts (10).

3. The grab handle according to any of the preceding claims, wherein at least said attachment portion (4) and said retaining portion (5) of said mounting bracket (3) are formed of a single piece of sheet metal.

4. A motor vehicle comprising a grab handle according to any of the preceding claims.

5. The motor vehicle according to the preceding claim, wherein said vehicle body member (1) is an A-pillar structure.

6. The motor vehicle according to any of the two preceding claims, wherein said mounting bracket (3) is covered by a trim (12) of said vehicle body member (1).

7. The motor vehicle according to any of the three preceding claims, wherein said attachment portion (4) of said mounting bracket (3) is fastened to said vehicle body member (1) via rivets (7).

## Patentansprüche

1. Handgriff für einen Innenraum eines Fahrzeugs, umfassend eine einzige Halterung (3), die einen Befestigungsteil (4) und einen Halteteil (5) enthält, wobei der Befestigungsteil (4) mehrere Öffnungen (6) zur Befestigung an einem Fahrzeugaufbauglied (1) definiert und der Halteteil (5) zwei Öffnungen (8) zur Befestigung eines Greifkörpers (9) an der Halterung (3) definiert, wobei der Befestigungsteil (4) einen Anlageflansch (11) zur Anlage an dem Fahrzeugaufbauglied (1) enthält, wobei sich der Anlageflansch (11) im Wesentlichen orthogonal zum Befestigungsteil (4) erstreckt,
**dadurch gekennzeichnet, dass**
sich der Halteteil (5) im Wesentlichen orthogonal zu dem Befestigungsteil (4) erstreckt und sich der Halteteil (5) in einer der Richtung des Anlageflansches (11) entgegengesetzten Richtung erstreckt.

2. Handgriff nach Anspruch 1, wobei der Greifkörper (9) durch Schrauben (10) an dem Halteteil (5) der Halterung (3) befestigt werden kann.

3. Handgriff nach einem der vorhergehenden Ansprüche, wobei mindestens der Befestigungsteil (4) und der Halteteil (5) der Halterung (3) aus einem einzigen Blechstück gebildet sind.

4. Kraftfahrzeug, das einen Handgriff nach einem der vorhergehenden Ansprüche umfasst.

5. Kraftfahrzeug nach dem vorhergehenden Anspruch, wobei das Fahrzeugaufbauglied (1) eine A-Säulenstruktur ist.

6. Kraftfahrzeug nach einem der beiden vorhergehenden Ansprüche, wobei die Halterung (3) durch eine Verkleidung (12) des Fahrzeugaufbauglieds (1) bedeckt ist.

7. Kraftfahrzeug nach einem der drei vorhergehenden Ansprüche, wobei der Befestigungsteil (4) der Halterung (3) durch Niete (7) an dem Fahrzeugaufbauglied (1) fixiert ist.

## Revendications

1. Poignée pour un habitacle d'un véhicule, comprenant un support d'assemblage (3) unique comprenant une partie de fixation (4) et une partie de retenue (5), ladite partie de fixation (4) définissant une pluralité d'ouvertures (6) pour la fixation à un élément de carrosserie (1) du véhicule et ladite partie de retenue (5) définissant deux ouvertures (8) pour la fixation d'un corps de préhension (9) audit support d'assemblage (3), ladite partie de fixation (4) comprenant une ailette d'appui (11) destinée à venir en appui sur ledit élément de carrosserie (1) du véhicule, ladite ailette d'appui (11) s'étendant de manière essentiellement perpendiculaire à ladite partie de fixation (4),
**caractérisée en ce que**
ladite partie de retenue (5) s'étend de manière essentiellement perpendiculaire à ladite partie de fixation (4) et ladite partie de retenue (5) s'étend dans une direction opposée à celle de ladite ailette d'appui (11).

2. Poignée selon la revendication 1, dans laquelle ledit corps de préhension (9) est apte à être fixé à ladite partie de retenue (5) dudit support d'assemblage (3) par le biais de boulons (10).

3. Poignée selon l'une quelconque des revendications précédentes, dans laquelle au moins ladite partie de fixation (4) et ladite partie de retenue (5) dudit support d'assemblage (3) sont constituées d'une seule pièce de tôle.

4. Véhicule à moteur comprenant une poignée selon l'une quelconque des revendications précédentes.

5. Véhicule à moteur selon la revendication précédente, dans lequel ledit élément de carrosserie (1) du véhicule est une structure de montant avant.

6. Véhicule à moteur selon l'une quelconque des deux revendications précédentes, dans lequel ledit support d'assemblage (3) est recouvert par une garniture (12) dudit élément de carrosserie (1) du véhicule.

7. Véhicule à moteur selon l'une quelconque des trois revendications précédentes, dans lequel ladite partie de fixation (4) dudit support d'assemblage (3) est attachée audit élément de carrosserie (1) du véhicule par le biais de rivets (7).
